# EUROPEAN PATENT APPLICATION

(11) **EP 2 493 208 A2**
(43) Date of publication of application: **29.08.2012**
(21) Application number: 12156507.1
(22) Date of filing: 22.02.2012
(51) Int. Cl.: H04Q 9/00

(54) **Meter processing communication system**

(30) Priority: 24.02.2011 US 201113033709
(71) Applicant: General Electric Company, Schenectady, New York 12345 (US)
(72) Inventor: Ree, Bradley Richard, Atlanta, GA Georgia 30339 (US); Penna, Mark Victor, Wake Forest, NC North Carolina 27587 (US); Underwood, Kevin Michael, Atlanta, GA Georgia 30339 (US)
(74) Representative: Cleary, Fidelma

(57) **Abstract**

Systems for supporting communication between networks (120, 130, 212, 214, 222) are disclosed. In one embodiment, a meter processing communication system (200) includes: a utility meter (110); and a central processor (140) integrated with the utility meter (110), the central processor (140) including a single communications stack (150), the single communications stack (150) and central processor (140) being configured to process communications between a plurality of different networks (120, 130, 212, 214, 222).

## Description

### BACKGROUND OF THE INVENTION

The subject matter disclosed herein relates generally to meter technology, and more particularly, to tools for configuring communication with and through a utility meter.

In the past, utility meters have been used to track consumption of a utility service at a given location or by a given user. For instance, electrical meters have been used to record a household's electrical consumption. Recently, there has been demand for more functionality in utility meters, as a result, utility meters have evolved from mechanical devices that only monitor and display the amount of a given service flowing through them, to complex computerized systems having a variety of management and informational functions. As part of this evolution, the utility meter has become a center of the communications link between the Home Area Network (HAN) and the Neighborhood Area Network (NAN), often being connected to multiple interfaces which run on distinct communication protocols. These connections and support of communication between multiple interfaces using distinct communication protocols is burdensome to utility meters which possess limited processing power. Some communication systems spare the utility meter from this processing load by requiring each interface to the NAN and HAN to have at least one communications stack located within it to process its own version of communication protocols and enable connectivity with other networks and interfaces. However, locating at least one communications stack within each interface also requires a processing core in each interface, additional memory space in the utility meter and makes the testing and maintenance of software burdensome as any updates or tests must be run across multiple communications stacks.

### BRIEF DESCRIPTION OF THE INVENTION

Systems for supporting communications through a utility meter are disclosed. In one embodiment of the invention, a meter processing communication system includes: a utility meter; and a central processor integrated with the utility meter, the central processor including a single communications stack, the single communications stack and central processor being configured to process communications between a plurality of different networks.

A first aspect of the disclosure provides a meter processing communication system including: a utility meter; and a central processor integrated with the utility meter, the central processor including a single communications stack, the single communications stack and central processor being configured to process communications between a plurality of different networks.

A second aspect provides a system including: a utility meter communicatively connected to a Home Area Network (HAN) and a Neighborhood Area Network (NAN); and a central processor integrated with the utility meter, the central processor containing a single communications stack configured to support communications between the NAN and the HAN via the utility meter by performing actions comprising: receiving communications within the utility meter from either or both of the NAN and the HAN; processing the received communications; routing the processed communications between either or both of the NAN and the HAN; encrypting the processed communications; and distributing the encrypted communications outside of the utility meter to either or both of the NAN and the HAN.

A third aspect provides a network communication system comprising: a utility meter communicatively connected to a plurality of interfaces; a backhaul network communicatively connected to the utility meter; and a central processor integrated with the utility meter, the central processor containing a single communications stack for supporting end-to-end routing and encryption of communications inside the central processor between the plurality of interfaces and the backhaul network.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 shows a schematic illustration of a meter processing communication system in accordance with an embodiment of the invention;
FIG. 2 shows a schematic illustration of a meter processing communication system supporting a plurality of interfaces in accordance with an embodiment of the invention;
FIG. 3 shows an illustrative communications stack in accordance with an embodiment of the invention;
FIG. 4 shows an illustrative communications stack in accordance with an embodiment of the invention;
FIG. 5 shows an illustrative communications stack in accordance with an embodiment of the invention;
FIG. 6 shows an illustrative communications stack in accordance with an embodiment of the invention;
FIG. 7 shows an illustrative utility meter with a communications stack capable of supporting multiple interfaces in accordance with an embodiment of the invention.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

As indicated above, aspects of the invention provide for systems configured to decrease communications stack and processing core requirements in a meter processing communication system by locating a single communications stack on a central utility meter processor. The communications stack supports multiple interfaces (including, e.g., radio interface, cellular interface, power line carrier interface, Ethernet interface, sub gigahertz mesh interface, etc.) and includes a small software driver for each interface, thereby removing the need for a communications stack to be located on each individual interface. Thus, all communications may be processed on the utility meter, terminating security in the central processor. As a result, system security is improved and the processing core and memory requirements of the meter processing communication system are reduced. Additionally, the use of a single software stack enables developers to use a single set of software development tools in maintaining the system.

In the art of utility meter systems (including, e.g., electrical meters, smart meters, power meters, etc.), communication systems are often employed as part of the system, these systems may serve as an Internet connection point for interfaces in a house or communicate metrology data such as usage totals or consumption patterns back to a utility. Typically, to reduce the burden on the limited processor of the utility meter, at least one communications stack is located on each interface which is connected to the utility meter. Each interface including a processing core which works with its own communications stack to process distinct communication protocols and thereby facilitate communication with the utility meter, other interfaces and other networks. However, as the number of interfaces connected to a given utility meter increases, so too does the number of distinct protocols being used. This in turn may result in the required number of communications stacks and processing cores increasing. Furthermore, this increase in the number of communications stacks and processing cores may waste resources and may require an increase in memory on the utility meter. Additionally, spreading of encryption and routing of data across multiple communications stacks may make the system more vulnerable to cyber attacks. Finally, the use of multiple communications stacks may be burdensome on the testing and maintenance of software as there is no common communications stack and thus no single binary image for developers and programs to work with.

In contrast to the conventional system, embodiments of the current invention provide for a utility meter with a central processor which includes and uses a single communications stack to process communications between networks and interfaces. The single communications stack on the central processor uses a plurality of software drivers to process distinct protocols used by the different networks and interfaces, thereby, enabling the utility meter to securely support and process communication between the different networks and interfaces. The use of a central processor and a single communications stack reduces the memory and processing demands on interfaces connected to the utility meter and provides for a communications stack which is more secure and easier to maintain.

As will be appreciated by one skilled in the art, the meter processing communication system described herein may be embodied as a system(s), method(s) or computer program product(s), e.g., as part of a communication system. Accordingly, embodiments of the present invention may take the form of an entirely hardware embodiment, an entirely software embodiment (including firmware, resident software, micro-code, etc.) or an embodiment combining software and hardware aspects that may all generally be referred to herein as a "circuit," "module," "network" or "system." Furthermore, the present invention may take the form of a computer program product embodied in any tangible medium of expression having computer-usable program code embodied in the medium.

Any combination of one or more computer usable or computer readable medium(s) may be utilized. The computer-useable or computer-readable medium may be, for example but not limited to, an electronic, magnetic, optical, electromagnetic, infrared, or semiconductor system, apparatus, or device. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the FIGURES.

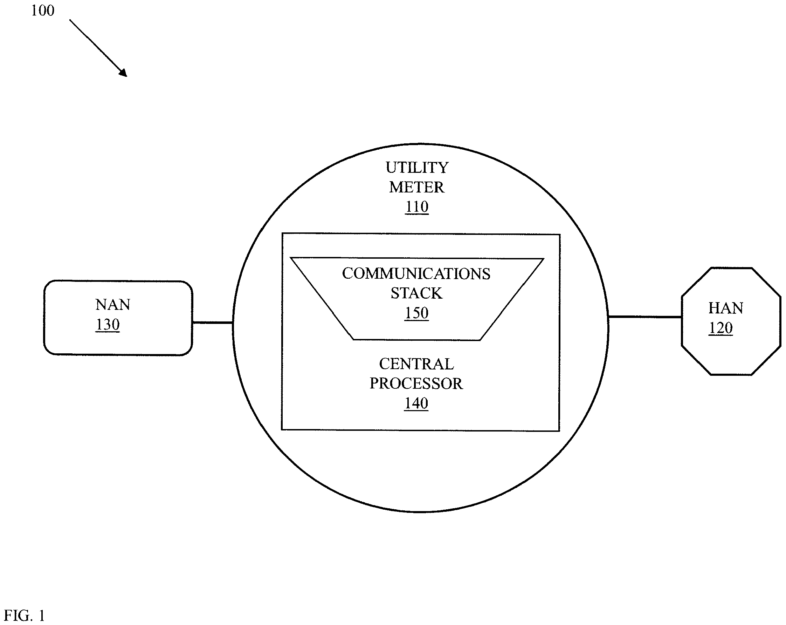

Turning to the figures, embodiments of a meter processing communication system are shown, where the meter processing communication system may increase security, provide for a single communications stack and decrease the processing and memory demands of the system by processing communications within a utility meter. Each of the components in the figures may be connected via conventional means, e.g., via wireless mesh, WiFi, power line communication, cellular, a common conduit or other known means as is indicated in FIGS. 1-7. Specifically, referring to FIG. 1, a schematic illustration of a meter processing communication system 100 is shown. Meter processing communication system 100 may include a utility meter 110, a Home Area Network (HAN) 120, a Neighborhood Area Network (NAN) 130, a central processor 140 and a communications stack 150. Utility meter 110 may comprise an electrical meter, a water meter, a gas meter or any other form of utility meter as is known in the art. HAN 120 may comprise multiple physical interfaces including but not limited to radio, mesh network, WiFi, and power line carrier interfaces. In this embodiment of the invention, utility meter 110 receives communications including distinct protocols from either or both of HAN 120 and NAN 130. Within utility meter 110, central processor 140 and communications stack 150 process, route and encrypt the received communications. Central processor 140 and communications stack 150 distribute the communications to either or both of HAN 120 and NAN 130, thereby facilitating communication between HAN 120 and NAN 130. Further, utility meter 110 may communicate with either or both of HAN 120 and NAN 130 and/or one or more other computer systems using any type of communications link. The communications link may include any combination of various types of wired and/or wireless links; may include any combination of one or more types of networks; and/or utilize any combination of various types of transmission techniques and protocols.

In an embodiment of the present invention, meter processing communication system 100 includes a central processor 140 with a single communications stack 150 which may process compressed and/or uncompressed internet protocols and support communications between any of utility meter 110, HAN 120 and NAN 130. In one embodiment of the invention, single communications stack 150 may utilize an Internet Protocol (IP) suite or layer for handling communications between interfaces of HAN 120 and NAN 130. In another embodiment of the invention, single communications stack 150 may use a compressed protocol suite for handling communications between interfaces of HAN 120 and NAN 130. In another embodiment of the invention, single communications stack 150 may use Internet Protocol Version 6 (IPv6) to route between interfaces of HAN 120 and NAN 130. In another embodiment of the invention, central processor 140 may further comprise the meter processor for utility meter 110. In another embodiment of the invention, central processor 140 may be a termination point for encryption of communications between NAN 130 and HAN 120. In another embodiment of the invention, single communications stack 150 includes a plurality of Media Access Controllers (MACs) configured to enable communication between a plurality of interfaces on either or both of HAN 120 and NAN 130. In another embodiment of the invention, utility meter 110 may send metrology data such as usage totals or consumption patterns to either or both of HAN 120 and NAN 130. In another embodiment of the invention, central processor 140 and single communications stack 150 may, as part of the processing of communications, decrypt communications between HAN 120 and NAN 130 before re-encryption for distribution.

In any event, central processor 140 can comprise any general purpose computing article of manufacture capable of executing computer program code installed by a user. However, it is understood that central processor 140, utility meter 110, HAN 120 and NAN 130 are only representative of various possible equivalent computing devices that may perform the various process steps of the disclosure. To this extent, in other embodiments, meter processing communication system can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively.

Similarly, meter processing communication system 100 is only illustrative of various types of computer infrastructures for implementing the disclosure. When the communications link comprises a network, the network can comprise any combination of one or more types of networks (e.g., the Internet, a wide area network, a local area network, a virtual private network, etc.). Network adapters may also be coupled to the system to enable the data processing system to become coupled to other data processing systems or remote printers or storage devices through intervening private or public networks. Modems, cable modem and Ethernet cards are just a few of the currently available types of network adapters. Regardless, communications between the computing devices may utilize any combination of various types of transmission techniques.

As previously mentioned and discussed further below, single communications stack 150 has the technical effect of enabling central processor 140 to perform, among other things, the communications processing functions described herein. It is understood that some of the various components shown in FIGS. 1-7 can be implemented independently, combined, and/or stored in memory for one or more separate computing devices that are included in central processor 140. Further, it is understood that some of the components and/or functionality may not be implemented, or additional schemas and/or functionality may be included as part of meter processing communication system 100.

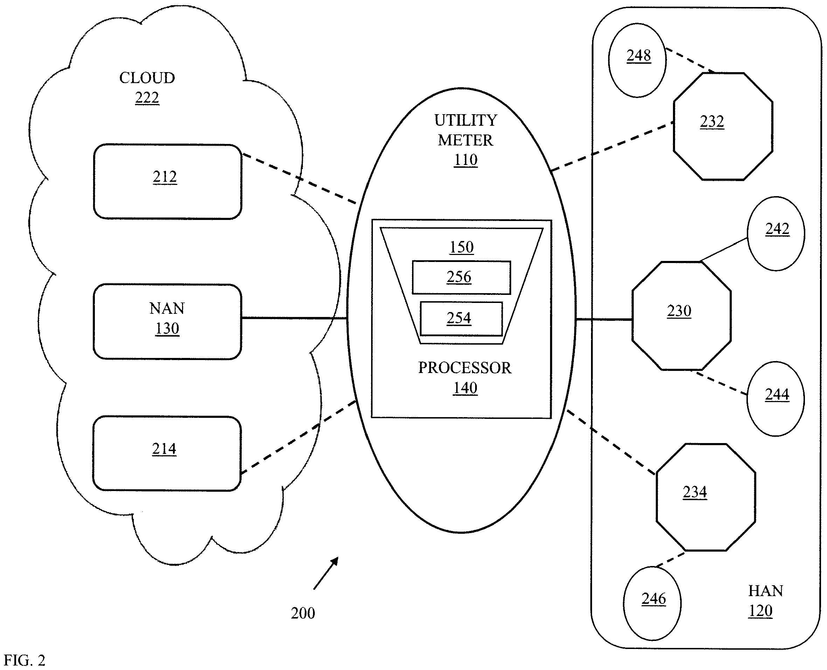

Turning to FIG. 2, a schematic illustration of an embodiment of a meter processing communication system 200 supporting a plurality of interfaces is shown. It is understood that elements similarly numbered between FIG. 1 and FIGS. 2-7 may be substantially similar as described with reference to FIG. 1. Redundant explanation of these elements has been omitted for clarity. Returning to FIG. 2, in this embodiment of the invention, meter processing communication system 200 may include a plurality of interfaces 230, 232, and 234 (e.g., low-power digital radio, power line communication, cellular infrastructure, wireless local area network, 900 MHz Mesh network, etc.) on HAN 120 communicatively connected to utility meter 110 for enabling communication and data exchange between a plurality of devices 242, 244, 246, 248 and utility meter 110 via single communications stack 150. Single communications stack 150 on central processor 140 of utility meter 110 may contain an internet protocol layer 254, an application layer 256 and a plurality of software drivers configured to enable communication between interfaces 230, 232, and 234 which may use distinct protocols. The plurality of interfaces 230, 232, and 234 may, via single communications stack 150 and central processor 140 on utility meter 110, communicate with cloud 222 and a plurality of networks and devices 212, 214 and NAN 130 (e.g., backhaul network, utility network, Internet, etc.) connected thereto. In one embodiment of the invention, central processor 140 and single communications stack 150 may support all communications between cloud 222 and HAN 120. In another embodiment of the invention, at least one of device 242, device 244, device 246, and device 248 may contain a communications stack for communicating with at least one of interface 230, interface 232, and interface 234. In another embodiment of the invention, central processor 140 may route all communications between HAN 120, NAN 130 and utility meter 110 end-to-end within single communications stack 150. In another embodiment of the invention, single communications stack 150 may comprise the only communications stack supporting communication between HAN 120, NAN 130 and utility meter 110. In one embodiment of the invention, all communications between interfaces 230, 232, and 234, may be routed through internet protocol layer 254. In another embodiment of the invention, all communications between NAN 130 and HAN 120 may be routed through application layer 256.

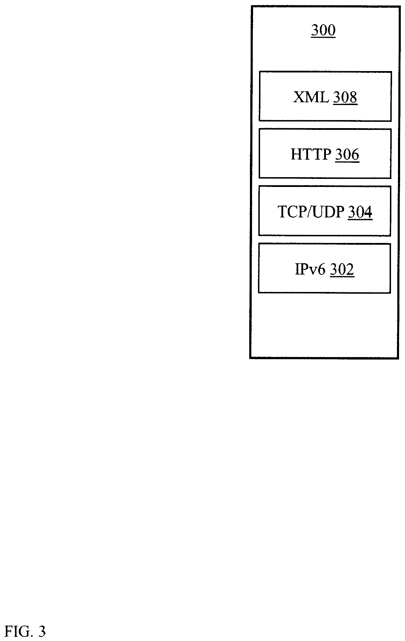

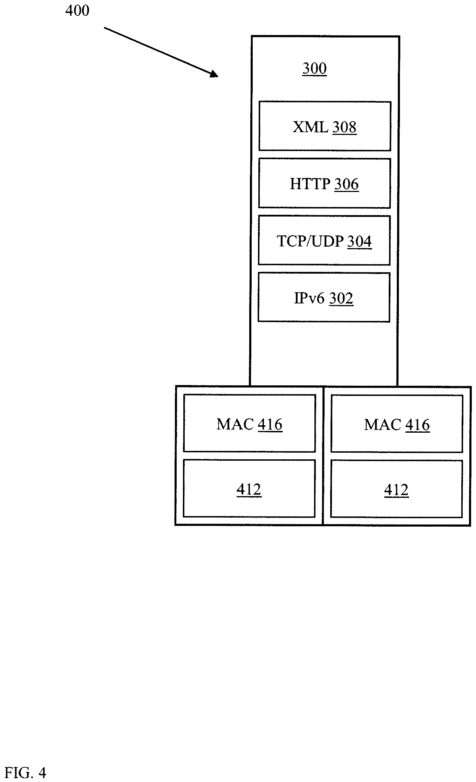

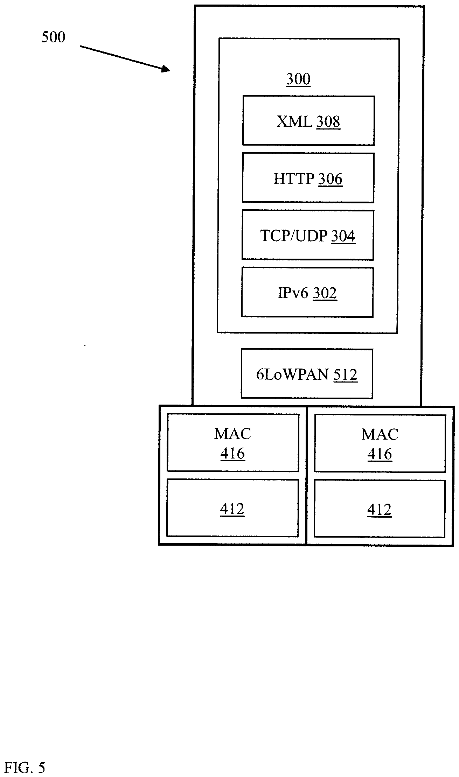

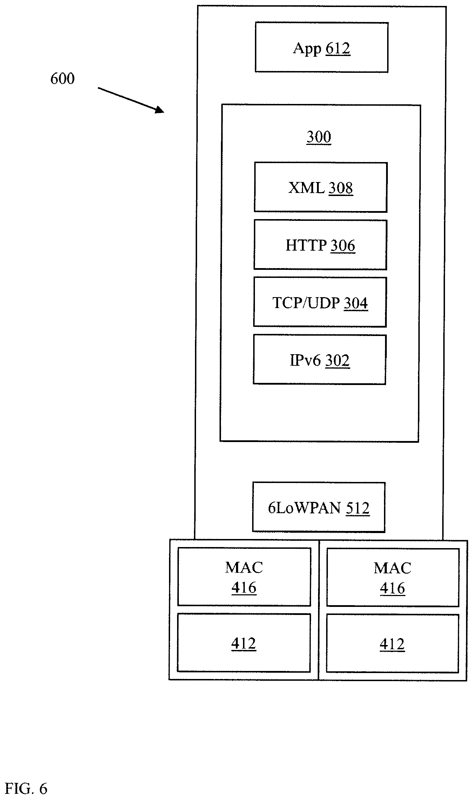

Turning to FIG. 3, an illustrative communications stack 300 is shown according to embodiments of the invention. Communications stack 300 includes IPv6 layer 302, Transmission Control Protocol/User Datagram Protocol (TCP/UDP) layer 304, Hypertext Transfer Protocol (HTTP) layer 306, and Extensible Markup Language (XML) application layer 308. Communications stack 300 is configured to support communication between interfaces (e.g., low-power digital radios, power line communications, cellular infrastructure, wireless local area networks, 900 MHz Mesh networks, etc.) and subsequently, networks and devices. IPv6 layer 302, comprises an Internet layer for packet routing, host addressing and identification utilizing Internet Protocol version 6 (IPv6). TCP/UDP layer 304, comprises a transport layer for connecting applications, error control, segmentation, flow control, congestion control and application addressing. HTTP layer 306, comprises an application layer which includes specifications for services that support user and application tasks such as file transfer, interpretation of graphic formats and documents and document processing. XML layer 308, comprises a further application layer for encoding. Turning to FIG. 4, an illustrative communications stack 400 for supporting multiple interfaces is shown according to embodiments of the invention. In this embodiment of the invention, a plurality of physical layer connections 412 have been communicatively connected with communications stack 300 via Media Access Control (MAC) layers 416. MAC layers 416 perform addressing and channel access control mechanisms, as a result, communications stack 400 is capable of supporting communication between multiple interfaces via the plurality of physical layer connections 412 which are communicatively connected to communications stack 300 via MAC layers 416. Further, turning to FIG. 5, an illustrative communications stack 500 for supporting multiple interfaces is shown according to embodiments of the invention. In this embodiment of the invention, an IPv6 over Low power Wireless Personal Area Networks (6LoWPAN) layer 512 is added between communications stack 300 and MAC layers 416. 6LoWPAN layer 512 may compress communications for low bandwidth networks, assisting communications stack 300 in connecting and communicating with wireless interfaces utilizing an IPv6 protocol. Additionally, turning next to FIG. 6, an illustrative communications stack 600 for supporting multiple interfaces is shown according to embodiments of the invention. In this embodiment of the invention, an application layer 612 is added on top of communications stack 300. Application layer 612 may enable interface communication with control programs so as to enable smart energy management capabilities of devices. In this embodiment of the invention, communications may be routed through TCP/UDP layer 304.

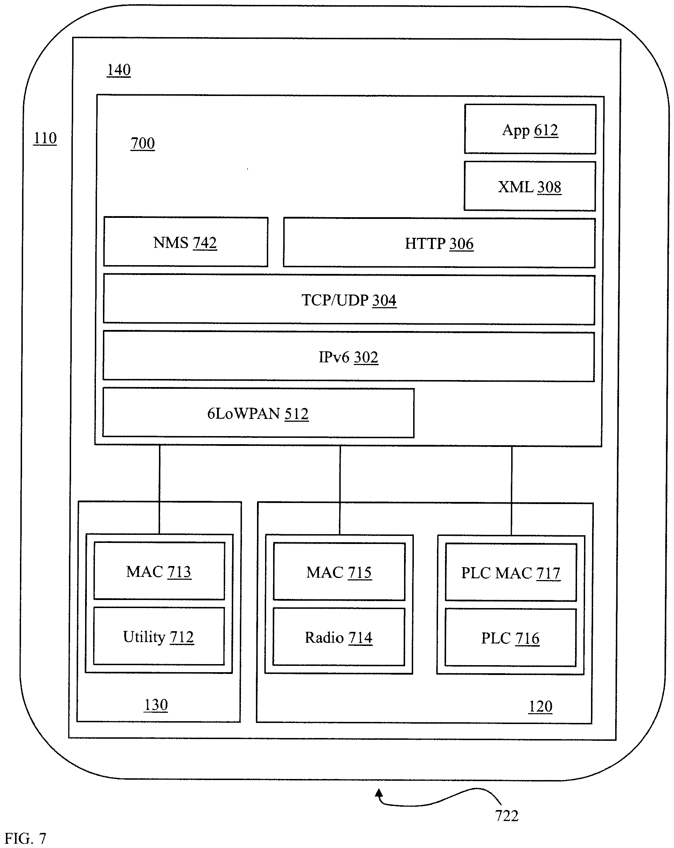

Turning to FIG. 7, an illustrative meter processing communication system 722 including utility meter 110 containing a single communications stack 700 is shown supporting multiple interfaces according to embodiments of the invention. In this embodiment of the invention, utility meter 110 includes central processor 140. Central processor 140 includes a single communications stack 700 which is communicatively connected to multiple networks HAN 120 and NAN 130, via multiple interfaces, utility company 712, radio interface 714 and power line carrier physical interface (PLC) 716. Utility company interface 712 on NAN 130 is communicatively connected to communications stack 700 via a wireless NAN Media Access Controller (MAC) 713 in communication with 6LoWPAN layer 512. This communicative connection enables utility company interface 712 to be wirelessly supported by communications stack 700, sending and receiving communications with HAN 120, radio interface 714 and PLC 716 via utility meter 110. A separate low power radio interface 714 on HAN 120 is communicatively connected to communications stack 700 via a MAC 715 in communication with 6LoWPAN layer 512. This communicative connection enables radio interface 714 to be wirelessly supported by communications stack 700, sending and receiving communications with NAN 130, HAN 120 and PLC 716 via utility meter 110. A separate PLC interface 716 on HAN 120 is communicatively connected to communications stack 700 via a PLC MAC layer 717. This communicative connection enables PLC interface 716 to be supported by communications stack 700, sending and receiving communications with NAN 130, HAN 120 and radio interface 714 via utility meter 110. With communications stack 700 communicatively connected to each network, HAN 120 and NAN 130, and each interface, utility company interface 712, radio interface 714 and PLC interface 716, end-to-end security for communications is maintained within utility meter 110 via IPv6 layer 302 and TCP/UDP layer 404. In one embodiment of the invention, routing of encrypted or decrypted data between HAN 120 and NAN 130 is performed at IPv6 layer 302. In another embodiment of the invention, any of utility company interface 712, radio interface 714 and PLC interface 716 may utilize either or both of a transmission control protocol suite and an internet protocol suite/layer. In another embodiment of the invention, communications to and from NAN 130 may pass directly to IPv6 layer 302 through MAC 713, bypassing 6LoWPAN layer 512. In another embodiment of the invention, communications may be routed from NAN 130 to HAN 120 via an application layer such as Network Management System (NMS) 742. In one embodiment of the invention, NAN 130, may communicate with NMS 742, NMS 742 may discover network inventory, monitor the health and status of devices and provide alerts to conditions that impact system performance. NMS 742 may communicate with application layer 612, making adjustments to devices (e.g. adjusting thermostat temperature, turning on lights, preheating a stove, etc.) communicatively connected to communications stack 700 via radio interface 714 or PLC 716. In another embodiment of the invention, communications within and between HAN 120 and NAN 130 may be routed through Application Layer 612. In another embodiment of the invention, only communications between interfaces MAC 715 and PLC MAC 717 on HAN 120 may be routed through TCP/UDP layer 304 while communications between HAN 120 and NAN 130 may be routed through application layer 612.

As discussed herein, various systems and components are described as "communicating" data. It is understood that the corresponding data can be obtained using any solution. For example, the corresponding system/component can generate and/or be used to generate the data, retrieve the data from one or more data stores or sensors (e.g., a database), receive the data from another system/component, and/or the like. When the data is not generated by the particular system/component, it is understood that another system/component can be implemented apart from the system/component shown, which generates the data and provides it to the system/component and/or stores the data for access by the system/component.

The foregoing drawings show some of the processing associated according to several embodiments of this disclosure. In this regard, each drawing represents a process associated with embodiments of the method described. It should also be noted that in some alternative implementations, the acts noted in the drawings or blocks may occur out of the order noted in the figure or, for example, may in fact be executed substantially concurrently or in the reverse order, depending upon the act involved. Also, one of ordinary skill in the art will recognize that additional blocks that describe the processing may be added.

The meter processing communication system of the present disclosure is not limited to any one particular meter, electrical meter, smart meter or other system, and may be used with other power and communication systems and/or systems (e.g., wireless router, network hub, server, etc.). Additionally, the meter processing communication system of the present invention may be used with other systems not described herein that may benefit from the teachings or embodiments of the invention.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A meter processing communication system (100, 200, 722) comprising:
a utility meter (110); and
a central processor (140) integrated with the utility meter (110), the central processor (140) including a single communications stack (150, 300, 400, 500, 600, 700), the single communications stack (150, 300, 400, 500, 600, 700) and central processor (140) being configured to process communications between a plurality of different networks (120, 130, 212, 214, 222).

2. The meter processing communication system (100, 200, 722) of claim 1, wherein the single communications stack (150, 300, 400, 500, 600, 700) utilizes an Internet Protocol (IP) suite (254).

3. The meter processing communication system (100, 200, 722) of claim 1 or claim 2, wherein the central processor (140) is configured to be a termination point for encryption.

4. The meter processing communication system (100, 200, 722) of any preceding claim, wherein the single communications stack (150, 300, 400, 500, 600, 700) includes a media access controller (MAC) (416, 713, 715, 717) for each network (120, 130, 212, 214, 222) in the plurality of different networks (120, 130, 212, 214, 222).

5. The meter processing communication system (100, 200, 722) of claim 2, wherein the IP suite (254) used by the single communications stack (150, 300, 400, 500, 600, 700) is Internet Protocol Version 6 (IPv6) (302).

6. The meter processing communication system (100, 200, 722) of claim 2, wherein the plurality of different networks (120, 130, 212, 214, 222) include a Home Area Network (HAN) (120) and a Neighborhood Area Network (NAN) (130).

7. The meter processing communication system of claim 6, wherein the utility meter is configured to communicate metrology data to either or both of the NAN and the HAN.

8. The meter processing communication system (100, 200, 722) of claim 6, wherein communications between a plurality of interfaces (230, 232, 234, 714, 716) located on the HAN (120) are routed through an Internet Protocol layer (254) on the single communications stack (150, 300, 400, 500, 600, 700).

9. The meter processing communication system (100, 200, 722) of claim 6, wherein the single communications stack (150, 300, 400, 500, 600, 700) includes an application layer (256, 612), the application layer (256, 612) for routing communications between the HAN (120) and the NAN (130).

10. The meter processing communication system of claim 6, wherein the NAN includes at least one interface selected from a group consisting of: a radio interface, a cellular interface, a power line carrier interface, an Ethernet interface and a Sub Gigahertz Mesh interface.

11. A system comprising:
a utility meter (110) communicatively connected to a Home Area Network (HAN) (120) and a Neighborhood Area Network (NAN) (130); and
a central processor (140) integrated with the utility meter (110), the central processor (140) containing a single communications stack (150, 300, 400, 500, 600, 700) configured to support communications between the NAN (130) and the HAN (120) via the utility meter (110) by performing actions comprising:
receiving communications within the utility meter (110) from either or both of the NAN (130) and the HAN (120);
processing the received communications;
routing the processed communications between either or both of the NAN (130) and the HAN (120);
encrypting the processed communications; and
distributing the encrypted communications outside of the utility meter (110) to either or both of the NAN (130) and the HAN (120).

12. The system of claim 11, wherein the single communications stack includes a plurality of media access controllers (MACs), the plurality of MACs being configured to enable communication with a plurality of physical interfaces.

13. The system of claim 12, wherein the central processor is configured to be a termination point for encryption.

14. The system of claim 13, wherein the single communications stack is further configured to decrypt the received communications.

15. A network communication system (100, 200, 722) comprising:
a utility meter (110) communicatively connected to a plurality of interfaces (230,232,234,712,714,716);
a backhaul network (120, 130, 212, 214, 222, 712) communicatively connected to the utility meter (110); and
a central processor (140) integrated with the utility meter (110), the central processor (140) containing a single communications stack (150, 300, 400, 500, 600, 700) for supporting end-to-end routing and encryption of communications inside the central processor (140) between the plurality of interfaces (230, 232, 234, 712, 714, 716) and the backhaul network (120, 130, 212, 214, 222, 712).
